# DEMANDE DE BREVET EUROPEEN

(11) **EP 1 967 949 A1**
(43) Date de publication de la demande: **10.09.2008**
(21) Numéro de dépôt: 07300851.8
(22) Date de dépôt: 07.03.2007
(51) Int. Cl.: G06F 9/50

(54) **Procédé pour exécuter un programme relatif à plusieurs services, système et dispositif électroniques correspondants**

(71) Demandeur: GEMPLUS, 13420 Gémenos (FR)
(72) Inventeur: Potonniee, Olivier, 13006, MARSEILLE (FR); Deschamps, Eric, 13008, MARSEILLE (FR)

(57) **Abrégé**

L'invention concerne un procédé pour exécuter au moins un programme relatif à au moins un service compris dans un dispositif comprenant au moins un espace mémoire destiné à être alloué pour exécuter au moins l'un des services, et au moins deux points d'accès pour accéder à des services (240, 250, 260, 270) accessibles depuis un réseau externe au dispositif. Selon l'invention, le procédé comprend les étapes : le dispositif (2) associe un service (220) centralisateur à au moins deux (212, 214, 216, 218) points d'accès ; alloue un espace mémoire à un service pour la réception d'une requête de connexion à un desdits services ; exécute le service centralisateur, son exécution permettant d'attendre une réception d'une requête de connexion ; et, en son absence, seul le service (220) centralisateur dispose d'un espace mémoire alloué.
L'invention concerne également un dispositif (2) et un système électroniques correspondants.

## Description

### Domaine technique de l'invention :

L'invention concerne, d'une façon générale, un procédé pour exécuter un programme relatif à au moins un service compris au sein d'un dispositif électronique embarqué.

L'invention porte également sur un dispositif électronique embarqué apte à fournir un ou plusieurs services depuis un réseau de communication externe au dispositif électronique embarqué. Le dispositif électronique embarqué met en oeuvre le procédé pour exécuter un programme relatif à au moins un service.

L'invention concerne aussi un système électronique comprenant un tel dispositif électronique embarqué coopérant avec un dispositif hôte.

### Etat de la technique :

Dans la suite de la présente description, on entend par le mot « service», un traitement d'une requête.

On entend par l'expression « dispositif électronique embarqué », dans le présent document de brevet, tout dispositif électronique comprenant au moins une mémoire et un microprocesseur, et destiné à coopérer avec un dispositif hôte pour réaliser une fonction pour le compte du dispositif hôte. Le dispositif électronique embarqué comporte une ou plusieurs mémoires éventuellement de types différents utilisées pour l'exécution d'instructions d'un programme pour traiter un ou plusieurs services.

Typiquement, le microprocesseur, en tant qu'unité de traitement, gère et contrôle le dispositif électronique embarqué, en particulier pour des tâches spécifiques. Ces dernières sont, entre autres, propres à des services accessibles depuis un réseau de communication externe au dispositif électronique.

Un tel dispositif électronique embarqué peut être un objet portable (ou « token » en langue anglaise). L'objet portable constitue un support qui peut se présenter sous différentes formes, par exemple, un dongle (encore dit « dongle » en langue anglaise), par exemple de type clef USB (acronyme pour « Universal Serial Bus » en langue anglaise), ou une carte SIM (acronyme pour « Subscriber Identity Module » en langue anglaise).

De façon classique, le dispositif électronique embarqué est destiné à coopérer avec un dispositif hôte, afin de pouvoir exploiter, au moins en partie, un ou plusieurs services supportés par le dispositif électronique embarqué.

Typiquement, le dispositif hôte peut être notamment un ordinateur personnel (ou PC pour « Personal Computer » en langue anglaise), un téléphone mobile, un assistant personnel numérique (ou PDA pour « Personal Digital Assistant » en langue anglaise), ou un lecteur de dispositif électronique embarqué communicant par exemple par ondes radiofréquences. Le dispositif hôte est connecté au dispositif électronique embarqué. Le dispositif hôte peut être considéré en lui-même, comme un réseau de communication externe vis-à-vis du dispositif électronique embarqué. Le dispositif hôte peut être, lui-même, connecté à un réseau de communication global. Le dispositif électronique embarqué est alors relié au réseau de communication global par l'intermédiaire du dispositif hôte. A titre d'exemple, il peut s'agir du réseau Internet, en tant que réseau de communication global. Il est clair, cependant, que l'invention n'est nullement limitée à l'accès au réseau Internet.

On rappelle qu'un serveur est un système informatique fournissant un ou plusieurs services applicatifs à d'autres systèmes informatiques appelés clients au travers d'un réseau de communication. Le serveur est en attente d'une requête de connexion à un service applicatif hébergé par le serveur.

Dans le cadre de la présente invention, un client transmet, d'abord, une requête de connexion propre à chaque service applicatif qu'il désire voir exécuter.

Ensuite, le serveur reçoit, par l'intermédiaire d'un point d'accès à l'un des services applicatifs, les requêtes de connexion aux services applicatifs.

Enfin, le système informatique comportant les points d'accès traite les requêtes de connexion aux services applicatifs associés, et exécute les services applicatifs requis.

Il est connu d'intégrer un serveur au sein d'un dispositif électronique embarqué.

Une telle intégration peut prévoir un point d'accès pour chaque service applicatif spécifique offert par le dispositif électronique embarqué. Ainsi, le serveur réserve un point d'accès, pour assurer à chacun des services applicatifs disponibles, un traitement correspondant.

Puis, chaque service applicatif passe dans un état passif d'attente d'une requête correspondante de connexion au service applicatif émanant d'un client.

Des ressources mémoire permettent de sauvegarder, de manière dynamique, c'est-à-dire en cours d'exécution d'un programme, notamment le contexte d'exécution avant l'exécution du flux d'exécution associé à chaque service applicatif requis.

Toutefois, une telle solution présente un inconvénient majeur consistant à monopoliser, pour chaque service applicatif en phase d'attente de réception d'une requête de connexion audit service, des ressources mémoire.

Or, une telle monopolisation de ressources mémoire, s'accroissant proportionnellement avec le nombre de services applicatifs disponibles « écoutant » en parallèle, augmente la taille de l'espace mémoire à prévoir pour les services applicatifs accessibles.

Une telle augmentation d'espace mémoire ainsi monopolisée provoque, notamment lorsque l'espace mémoire disponible au sein du dispositif électronique embarqué (tel qu'une carte à puce) est limité, rapidement un dépassement de la capacité mémoire disponible.

Le dépassement provoqué de la capacité mémoire disponible est pénalisant en particulier vis-à-vis d'une tâche à exécuter surtout si aucune requête de connexion à un des services applicatifs n'est reçue.

### Exposé de l'invention :

La présente invention a notamment pour objectif de fournir un dispositif électronique embarqué et un procédé pour exécuter au moins un programme permettant d'offrir un ou des services offerts par le dispositif embarqué et accessibles depuis un réseau de communication externe au dispositif embarqué, tout en optimisant l'utilisation de ressources disponibles pour le traitement de requêtes de connexion correspondantes.

Cet objectif est atteint à l'aide d'un procédé pour exécuter au moins un programme relatif à au moins un service compris au sein d'un dispositif électronique embarqué, chaque service nécessitant une allocation d'un espace mémoire pour être exécuté, le dispositif électronique embarqué comprenant au moins un espace mémoire destiné à être alloué pour exécuter au moins l'un des services, et au moins deux points d'accès pour accéder respectivement à des services applicatifs accessibles depuis un réseau de communication externe au dispositif électronique embarqué.

Selon l'invention, le procédé comprend les étapes suivantes : le dispositif électronique embarqué associe un service centralisateur à au moins deux desdits au moins deux points d'accès ; le dispositif électronique embarqué alloue un espace mémoire à un service pour la réception d'une requête de connexion à un desdits services ; le dispositif électronique embarqué exécute le service centralisateur, l'exécution du service centralisateur permettant d'attendre une réception, par au moins l'un des points d'accès associés au service centralisateur, d'au moins une requête de connexion dédiée à l'un des services applicatifs ; et, en l'absence de réception d'une requête de connexion à un service, le seul service disposant d'un espace mémoire alloué est le service centralisateur..

Le principe général de l'invention repose donc sur l'interposition, au sein du dispositif électronique embarqué, d'un seul et même service centralisateur entre une pluralité de points d'accès à des services applicatifs et les services applicatifs ainsi concernés, pour attendre une potentielle réception d'une ou plusieurs requêtes de connexion à un ou des services.

Il convient de noter qu'une requête de connexion à un service reçue peut ne pas être relative à un service applicatif offert par le dispositif électronique embarqué ou être relative à un service applicatif n'existant pas ou plus au sein du dispositif électronique embarqué. Le service applicatif pour lequel une requête de connexion a été reçue n'existe plus, par exemple, suite à une mise à jour du ou des services applicatifs offerts par le dispositif électronique embarqué.

Le service centralisateur centralise donc le traitement de toute requête de connexion à un service reçue du réseau de communication externe au dispositif électronique embarqué et associée à un point d'accès correspondant. Ainsi, l'invention permet de mobiliser, lors d'une phase d'attente de réception de potentielles requêtes de connexion à un ou des services provenant du réseau externe, un espace mémoire en relation uniquement avec le service centralisateur.

De façon avantageuse, le procédé comprend les étapes suivantes : au moins un point d'accès associé au service centralisateur reçoit au moins une requête de connexion dédiée à un service applicatif ; le service centralisateur est activé pour chaque requête de connexion reçue et dédiée à un service applicatif ; et le service centralisateur traite chaque requête de connexion reçue et dédiée à un service applicatif..

De cette manière, c'est le service centralisateur qui déclenche le traitement d'une requête de connexion propre à un service applicatif reçue par un des points d'accès associés au service centralisateur.

Selon un mode de réalisation préférentiel de l'invention, le procédé comprend l'étape suivante : le service centralisateur limite à au plus un nombre maximum d'au moins un flux d'exécution simultanément en cours, de façon que le nombre de services applicatifs en cours d'exécution à un instant donné est inférieur ou égal au nombre maximum de flux d'exécution.

Ainsi, le service applicatif est seulement exécuté lorsque le nombre maximum de flux d'exécution n'est pas dépassé.

Dans un premier mode de réalisation particulier de l'invention, <rev.4>.

En d'autres termes, un ou plusieurs flux d'exécution sont générés, afin d'exécuter potentiellement tout ou partie du ou des services applicatifs concernés éventuellement, de manière simultanée.

Selon un tel premier mode de réalisation, le procédé comprend les étapes suivantes : le dispositif électronique embarqué pré-instancie au plus un nombre maximum d'au moins un flux d'exécution simultanément en cours, le dispositif électronique embarqué affecte un flux d'exécution à chaque service applicatif pour lequel une requête de connexion a été reçue, dit service applicatif connecté ; le dispositif électronique embarqué exécute le flux d'exécution affecté ; le flux d'exécution affecté exécute, au moins en partie, chaque service applicatif connecté.

Selon un deuxième mode de réalisation particulier de l'invention, le procédé comprend, pour chaque requête de connexion reçue, les étapes suivantes : le service centralisateur instancie un flux d'exécution ; le service centralisateur affecte le flux d'exécution instancié à un service applicatif pour lequel une requête de connexion a été reçue, dit service applicatif connecté ; le dispositif électronique embarqué exécute le flux d'exécution affecté ; le flux d'exécution affecté exécute, au moins en partie, le service applicatif connecté..

En d'autres termes, le service centralisateur permet, après la réception de chaque requête de connexion à un service applicatif y associé, un traitement ultérieur par le service applicatif concerné, en pointant le flux d'exécution nouvellement généré. Ainsi, outre le flux d'exécution relatif au service centralisateur, plusieurs flux d'exécution relatifs aux services applicatifs peuvent être, simultanément, en cours d'exécution.

On comprend, d'une part, que le service centralisateur peut contrôler toute connexion à ouvrir, et d'autre part, qu'un service applicatif connecté peut clôturer la connexion ouverte correspondante. En revanche, le service applicatif connecté contrôle, seul, le flux de communication propre à tout échange faisant suite à la réception d'une requête de connexion à un service applicatif y associé, et, après l'exécution du service, peut retourner au client une réponse correspondante.

Dans un tel deuxième mode de réalisation, le procédé comprend les étapes suivantes : le service centralisateur détecte la réception d'une requête de connexion à un service applicatif plus prioritaire qu'un service applicatif pour lequel un flux d'exécution correspondant est en cours ; le service centralisateur instancie un nouveau flux d'exécution ; le service centralisateur affecte ledit nouveau flux d'exécution instancié au service applicatif plus prioritaire connecté ; le service centralisateur transmet, à un ordonnanceur de flux d'exécution de services applicatifs dudit dispositif électronique embarqué, au moins une information relative à l'ordre de priorité d'exécution des flux d'exécution ; l'ordonnanceur active ledit nouveau flux d'exécution affecté au service applicatif plus prioritaire connecté ; l'ordonnanceur suspend le flux d'exécution affecté exécutant le service applicatif moins prioritaire ; ledit nouveau flux d'exécution affecté exécute le service applicatif plus prioritaire connecté ; l'ordonnanceur active le flux d'exécution affecté au service applicatif moins prioritaire ; et l'ordonnanceur reprend l'exécution du service applicatif moins prioritaire au niveau où l'exécution du service applicatif moins prioritaire a été suspendue.

En d'autres termes, une fois qu'un deuxième service applicatif, plus prioritaire qu'un premier service applicatif en cours d'exécution, a fait l'objet d'une requête de connexion, le deuxième service applicatif est exécuté avant de revenir au premier service applicatif partiellement exécuté.

Selon une troisième variante de réalisation de l'invention, au moins un flux d'exécution étant affecté au service centralisateur, le dispositif électronique embarqué exécutant le flux d'exécution affecté, le procédé comprend les étapes suivantes : le service centralisateur déroute le flux d'exécution depuis le service centralisateur vers le service applicatif pour lequel une requête de connexion a été reçue, dit service applicatif connecté ; le flux d'exécution exécute le service applicatif connecté ; et le flux d'exécution reprend l'exécution du service centralisateur au niveau où l'exécution du service centralisateur a été dérouté.

En d'autres termes, le flux d'exécution du service centralisateur peut être, momentanément, affecté au service applicatif pour lequel une requête de connexion correspondante a été reçue, sans nécessiter la disponibilité d'un autre flux d'exécution.

Dans un mode préférentiel de réalisation de l'invention, au moins une requête de connexion dédiée à un service applicatif ayant été reçue au sein d'une période de temps prédéterminée par lesdits au moins deux points d'accès associés au service centralisateur, le procédé comprend une étape de définition, par l'intermédiaire du service centralisateur, d'un ordre de séquencement du traitement des requêtes de connexion à des services applicatifs reçues.

En d'autres termes, les requêtes de connexion dédiées à des services applicatifs reçues sont traitées, selon un ordre de priorité déterminé connu du seul service centralisateur. Pour ce faire, un ordonnanceur (ou « scheduler » en langue anglaise) interrompt l'exécution d'un service applicatif pour l'exécution d'un autre service applicatif plus prioritaire.

De cette manière, le service centralisateur peut gérer l'ouverture de connexion en fonction d'un ordre de priorité fixé entre les services applicatifs accessibles et potentiellement exécutables.

L'invention concerne également un dispositif électronique embarqué. Le dispositif électronique embarqué comprend au moins un programme relatif à au moins un service. Chaque service nécessite une allocation d'un espace mémoire pour être exécuté. Le dispositif électronique embarqué comprend au moins un espace mémoire destiné à être alloué pour exécuter au moins l'un des services, et au moins deux points d'accès pour accéder respectivement à des services applicatifs accessibles depuis un réseau de communication externe au dispositif électronique embarqué.

Selon l'invention, le dispositif électronique embarqué comprend : des moyens d'association d'un service centralisateur auxdits deux desdits au moins deux points d'accès ; des moyens d'allocation d'un espace mémoire à un service à la réception d'une requête de connexion à un service, des moyens d'exécution du service centralisateur permettant d'attendre une réception, par au moins l'un des points d'accès associés au service centralisateur, d'au moins une requête de connexion dédiée à l'un des services applicatifs, et, en l'absence de réception d'une requête de connexion à un service, le seul service disposant d'un espace mémoire alloué est le service centralisateur.

En tant que dispositif électronique embarqué, il peut, par exemple, s'agir d'une clef USB.

L'invention porte enfin sur un système électronique comprenant un dispositif hôte, et un dispositif électronique embarqué tel que précité et coopérant avec le dispositif hôte.

En tant que dispositif hôte, il peut, par exemple, s'agir d'un ordinateur personnel, et, en tant que dispositif électronique embarqué, il peut, par exemple, s'agir d'un « dongle » ne nécessitant pas de lecteur spécifique pour communiquer avec l'ordinateur personnel.

### Description des figures des dessins :

D'autres caractéristiques et avantages de l'invention apparaîtront à la lecture de la description d'un unique mode de réalisation préférentiel de l'invention, donné à titre de simple exemple indicatif non limitatif et des dessins annexés, dans lesquels :
- la figure 1 présente un schéma synoptique simplifié d'un mode de réalisation particulier d'un système électronique selon l'invention ;
- la figure 2 illustre un schéma simplifié d'un mode de réalisation particulier d'un dispositif électronique embarqué compris au sein du système électronique de la figure 1 ; et
- la figure 3 présente un organigramme simplifié d'un mode de réalisation préférentiel d'un procédé pour exécuter au moins un programme relatif à au moins un service compris au sein du dispositif électronique embarqué de la figure 2.

### Description d'un mode de réalisation particulier de l'invention :

Le principe général de l'invention repose donc sur une utilisation d'un service centralisateur exécuté au sein d'un dispositif électronique embarqué et attaché à une pluralité de points d'accès à des services applicatifs accessibles depuis le monde extérieur, afin d'attendre la réception de requêtes de connexion de services applicatifs associés de la sorte.

Ainsi, le service centralisateur est le seul service actif tant qu'aucune requête de connexion à un service applicatif associé et existant au sein du dispositif électronique embarqué n'a été reçue.

En d'autres termes, le flux d'exécution du service centralisateur est le seul à être en cours d'exécution pour l'attente de requêtes de connexion éventuellement dédiées à des services applicatifs disponibles au sein du dispositif électronique embarqué.

C'est le service centralisateur qui concentre les requêtes de connexion à un ou des services reçues en vue de leur traitement commun. Le service centralisateur intercepte la réception de toute requête de connexion à un service pour son traitement, avant de pouvoir, le cas échéant, mettre en relation le point d'accès impliqué dans la réception et le service applicatif concerné correspondant.

Une fois qu'une requête de connexion à un service applicatif offert par le dispositif électronique embarqué a été traitée par le service centralisateur, toute information ultérieure transmise depuis le client accède directement, c'est-à-dire de manière transparente vis-à-vis du service centralisateur, au service applicatif connecté. Une ou des informations transmises depuis le client ayant préalablement transmis la requête de connexion au service applicatif connecté peuvent constituer une requête d'exécution du service en question, afin de lancer son exécution.

De même, le flux d'exécution exécuté pour l'exécution du service applicatif requis peut transmettre toute information directement au client ayant requis la connexion du service applicatif concerné. Il peut s'agir d'une information spécifique du service applicatif requis indiquant, par exemple, que la requête de connexion au service applicatif connecté a bien été reçue suivie éventuellement d'une ou plusieurs autres informations indiquant, à son tour, qu'une requête d'exécution correspondante est nécessaire pour faire exécuter le service applicatif en question.

Par conséquent, après la réception d'une requête de connexion à un service applicatif, le point d'accès aiguille directement, c'est-à-dire sans passer par le service centralisateur, toute information ultérieure soit transmise depuis le client vers le service applicatif connecté correspondant, soit transmise depuis le service applicatif connecté vers le client à l'origine de la requête de connexion.

Dans la suite de la présente description, on considère le cas d'un système électronique comprenant un dispositif hôte et un dispositif électronique embarqué qui coopèrent pour offrir des services applicatifs particuliers par l'intermédiaire d'un serveur centralisateur contenu dans le dispositif embarqué.

Il est clair, cependant, que l'invention s'applique à d'autres systèmes électroniques. L'homme du métier peut aisément passer du système électronique illustré à un autre système électronique, tout en restant dans le cadre de la présente invention.

Il peut s'agir d'un système électronique intégrant trois dispositifs électroniques tels, par exemple, un ordinateur personnel ou PC (acronyme pour « Personal Computer » en langue anglaise) relié à un assistant numérique personnel ou PDA (acronyme pour « Personal Digital Assistant » en langue anglaise), en tant que dispositif hôte, qui accueille une carte SIM telle que définie selon la norme GSM et/ou 3GPP (pour « Third Generation Partnership Project » en langue anglaise), en tant que dispositif électronique embarqué. Dans un tel système, l'assistant numérique personnel échange, d'une part, avec l'ordinateur personnel connecté au réseau Internet, et d'autre part, avec la carte SIM. La carte SIM intègre plusieurs points d'accès à des services accessibles depuis le ou les réseaux externes à la carte SIM et associés à un service centralisateur. Une entité, membre d'un réseau externe à la carte SIM, tel qu'un téléphone portable avec lequel la carte SIM coopère, peut accéder, en tant que client distant, à l'ensemble des services associés au service centralisateur de la carte SIM.

C'est le service centralisateur qui régule, au sein de la carte SIM, le « trafic » dû aux requêtes de connexion aux services applicatifs reçues par les points d'accès associés au service centralisateur.

Une fois qu'un point d'accès associé, via le service centralisateur, à un service applicatif offert par la carte SIM, reçoit, toute autre information ultérieure, le point d'accès dirige toute(s) information(s) ultérieure(s) transmise(s) soit depuis le client vers le service applicatif connecté concerné soit depuis le service applicatif connecté vers le client à l'origine de la requête de connexion.

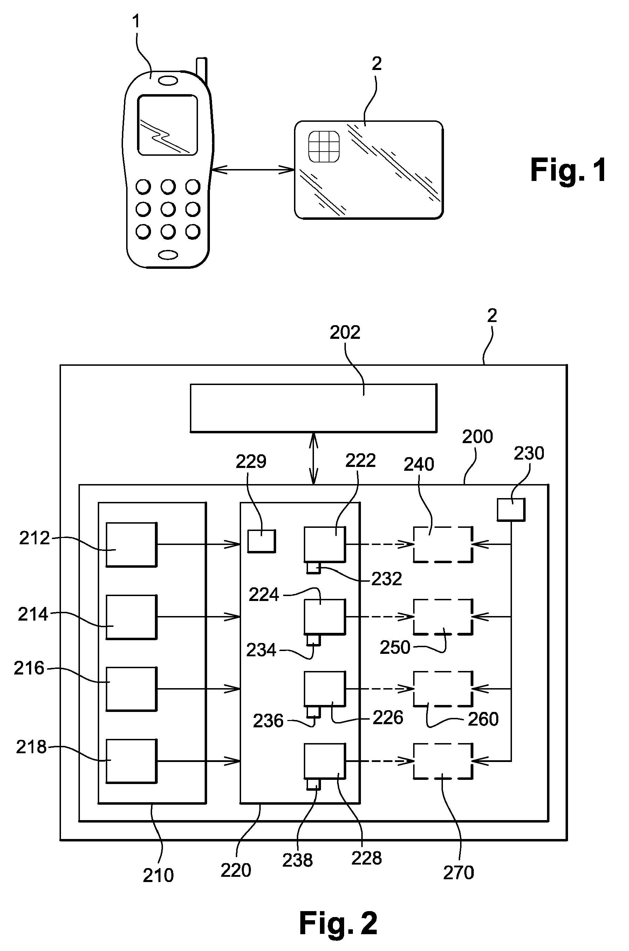

Comme présenté à titre d'exemple en relation avec la figure 1, le système électronique comporte un téléphone 1 portable, en tant que dispositif hôte, relié à une carte 2 SIM telle que définie selon la norme GSM, en tant que dispositif électronique embarqué.

La carte 2 SIM est insérée au sein du téléphone 1 portable.

La carte 2 SIM coopère avec le téléphone 1 portable, pour accéder à un réseau de communication externe à la carte 2 SIM, par exemple à travers une unique interface de communication physique.

Selon une variante de réalisation (non représentée), l'accès au réseau de communication externe s'effectue au travers de plusieurs interfaces de communication physiques.

Pour l'exemple choisi, à l'unique interface de communication physique correspond par exemple une seule adresse de réseau IP correspondante (acronyme pour « Internet Protocol » en langue anglaise).

Selon une variante de réalisation (non représentée), plusieurs adresses de réseau IP sont associées à l'unique interface de communication physique.

Quatre points d'accès à des services applicatifs sont associés à l'interface de communication physique. A chaque point d'accès est associé un numéro d'identifiant de service applicatif correspondant.

Un utilisateur bénéficie de l'écran du téléphone 1 portable pour visualiser des icônes respectivement associés aux services applicatifs embarqués dans la carte 2 SIM. L'utilisateur bénéficie également du clavier du téléphone 1 portable pour sélectionner un service applicatif à exécuter en activant un icône correspondant au service applicatif à l'aide d'un ou plusieurs boutons du clavier.

On considère la carte 2 SIM, en tant que dispositif intelligent embarquant plusieurs services applicatifs TCP/IP (acronymes pour « Transmission Control Protocol/Internet Protocol » en langue anglaise).

On rappelle que de tels services applicatifs TCP/IP sont des entités logicielles qui peuvent attendre des requêtes d'exécution envoyées par des clients distants au travers d'une connexion TCP/IP préalablement ouverte.

Bien entendu, on peut considérer d'autre(s) type(s) de service(s) applicatif(s), tels qu'un ou plusieurs services applicatifs UDP/IP (acronymes pour « User Datagram Protocol/Internet Protocol » en langue anglaise), sans sortir du cadre de la présente invention.

La carte 2 SIM comprend un serveur hébergeant quatre services applicatifs particuliers différents, associé chacun à un des quatre points d'accès aux services applicatifs. Chaque service applicatif peut être exécuté indépendamment des autres après la réception d'une requête de connexion au service applicatif concerné, éventuellement suivie d'une requête d'exécution spécifique à ce même service applicatif.

De préférence, les quatre points d'accès sont associés à un unique service centralisateur.

La carte 2 SIM exécute le service centralisateur pour attendre d'éventuelles requêtes de connexion correspondant aux services applicatifs que la carte 2 SIM offre à l'extérieur (via les quatre points d'accès).

Par exemple, le téléphone 1 portable, en tant que client distant, envoie une requête de connexion, sur chacun des quatre points d'accès, aux quatre services applicatifs disponibles au sein de la carte 2 SIM.

Les connexions étant ouvertes, le téléphone 1 portable envoie, ensuite, pour chaque service applicatif alors connecté le nécessitant, une requête d'exécution du service applicatif correspondante.

Il est clair que les différentes requêtes de connexion à des services applicatifs suivies d'éventuelles requêtes d'exécution de services correspondantes disponibles au sein de la carte 2 SIM peuvent provenir de plusieurs clients distants, et non pas du seul téléphone 1 portable. Il peut s'agir, en tant que client(s) distant(s), d'une autre carte SIM coopérant avec un autre téléphone portable, et/ou d'un ordinateur personnel relié au téléphone 1 portable.

En tant que services applicatifs offerts par la carte 2 SIM, on peut citer un service de navigation sur la toile (ou « Web » en langue anglaise), un service de transfert de fichier de données, un service d'administration à distance de la carte 2 SIM, par exemple depuis un serveur distant de type « OTA » (pour « Over The Air » en langue anglaise) (non représenté) accessible par ondes radiofréquences par l'intermédiaire du téléphone 1 portable, et un service d'échange de données de façon sécurisée, telle que pour des transactions bancaires. Le service de navigation sur la toile offert par la carte 2 SIM peut consister, suite à une requête de connexion puis d'une éventuelle requête d'exécution de ce service émise par le téléphone 1 portable ou au travers du téléphone 1 portable, à récupérer une page index désirée. En réponse, la carte 2 SIM transmet, à destination du client à l'origine d'une (de) telle(s) requête(s) (consécutives), des données propres à la page index désirée.

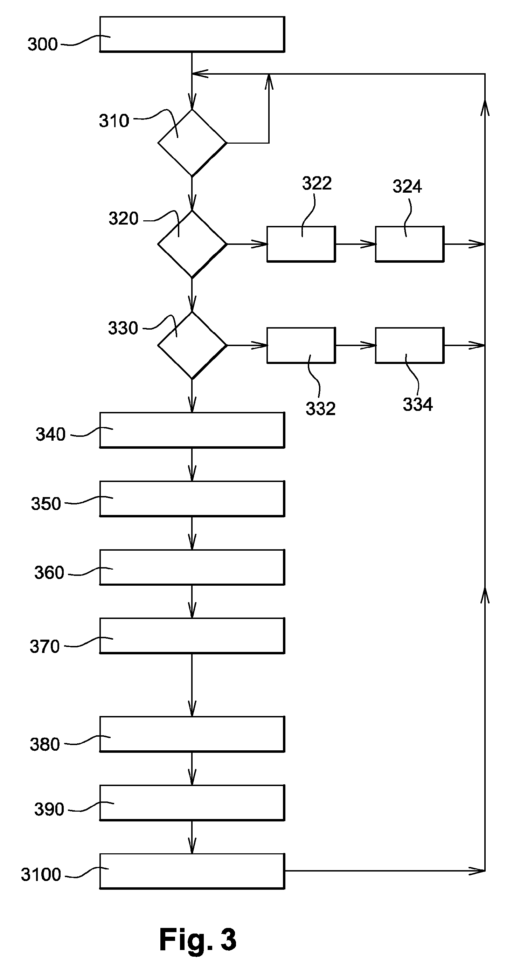

Des interactions client/serveur seront décrites, plus en détails, infra en relation avec le procédé décrit en relation avec la figure 3.

Certaines des requêtes de connexion aux services applicatifs éventuellement suivie(s) de requête(s) d'exécution correspondante(s) n'attendent pas, obligatoirement, en retour, des réponses associées transmises depuis la carte 2 SIM vers le client distant à l'origine de telles requêtes.

En effet, il peut s'agir d'une requête de connexion suivie éventuellement d'une requête d'exécution d'un service propre à l'administration à distance de la carte 2 SIM transmise depuis un ordinateur personnel (non représenté) relié au travers d'un réseau de communication au téléphone 1 portable. Une telle requête d'exécution d'administration est utilisée, par exemple, afin de convertir dans un format prédéterminé, en vue de satisfaire des contraintes de sécurité, un fichier de données à transférer depuis la carte 2 SIM à destination d'un client distant.

Une fois qu'une requête de connexion à un service applicatif a été reçue par un point d'accès identifié correspondant au service requis, puis détectée par le service centralisateur, la requête d'exécution du service applicatif est traitée, pour sa réception et son exécution, par le service applicatif concerné.

Pour ce faire, le point d'accès transmet la requête d'exécution du service applicatif en direction du service applicatif en question pour son exécution. Lorsque l'exécution du service applicatif requis est achevée, la connexion peut alors être close par le service applicatif concerné, à moins que le client distant ait à transmettre une ou plusieurs autres informations constituant, par exemple, une autre requête d'exécution du service connecté.

On décrit, à présent, en relation avec la figure 2, un mode de réalisation particulier de la carte 2 SIM selon l'invention.

La carte 2 SIM comporte, en particulier, un microprocesseur 202 et une ou plusieurs mémoires affectées pour exécuter plusieurs services applicatifs et représentées sur la figure 2, par souci de simplification, par un seul bloc 200 mémoire.

Il est clair que différents types de mémoire séparées sont toutefois possibles sans sortir du cadre de la présente invention.

Le microprocesseur 202 pilote l'ensemble des moyens utilisés par la carte 2 SIM. Le microprocesseur 202 gère et contrôle les ressources internes, dont le bloc 200 mémoire, les communications internes à la carte 2 SIM et les communications avec l'extérieur de la carte 2 SIM au travers d'une interface d'entrée/sortie (non représentée).

Le microprocesseur 202 pilote également l'ordre de séquencement des flux d'exécution au travers d'un ordonnanceur.

L'ordonnanceur permet, notamment lorsque plusieurs flux d'exécution doivent être effectués, suite à la réception quasi-simultanée de requêtes de connexion associées à un ou plusieurs services applicatifs, de définir l'ordre d'exécution des flux d'exécution correspondants.

On rappelle qu'un flux d'exécution est une séquence d'instructions pouvant être exécutée en parallèle à d'autre(s) séquence(s) soit par répartition temporelle (ou « time slicing » en langue anglaise), soit par traitements simultanés par différents processeurs (ou « multi-processing » en langue anglaise).

Un tel flux d'exécution présente un point d'entrée, par exemple par un point référençant le début de la séquence d'instructions, et un point de sortie terminant la séquence d'instructions.

Dans le cadre de la présente description, il s'agit d'une répartition temporelle pour l'exécution d'un flux d'exécution exécutant soit le service centralisateur soit un service applicatif au moins en partie.

Cependant, il est clair que l'homme du métier peut appliquer l'enseignement de l'invention dans une situation de traitements simultanés sans aménagement particulier.

L'ordonnanceur du système d'exploitation de la carte 2 SIM, peut interrompre, à l'aide d'une interruption de type matérielle ou de type logicielle, un flux d'exécution d'un service, constitué soit par le service centralisateur soit par un service applicatif, en cours d'exécution. Dans une telle situation, le contexte d'un flux d'exécution interrompu est sauvegardé dans une zone mémoire dédiée, et un nouveau contexte est fixé pour démarrer l'exécution propre à un autre service. Afin d'être en mesure de reprendre l'exécution du flux d'exécution interrompu, le contexte du flux d'exécution interrompu et sauvegardé doit être restauré.

Le bloc 200 mémoire, en tant qu'interface de communication avec le réseau de communication externe à la carte 2 SIM, comporte quatre espaces mémoires distincts :
- un premier espace 210 mémoire associé à un service de communication à un réseau externe à la carte 2 SIM, encore dit pile de communication au réseau internet (ou « IP stack » en langue anglaise),
- un deuxième espace 220 mémoire associé au service centralisateur,
- un troisième espace 230 mémoire associé à l'ordonnanceur, et
- un quatrième espace mémoire lui-même à répartir en quatre espaces 240, 250, 260, 270 mémoire respectivement associés aux quatre services applicatifs offerts par la carte 2 SIM.

Selon une variante de réalisation (non représentée), plusieurs espaces mémoire sont associés pour l'exécution d'un seul et même service applicatif.

Le premier espace 210 mémoire comporte quatre points d'accès aux services applicatifs disponibles au sein de la carte 2 SIM.

Les quatre points d'accès aux services applicatifs sont associés, de manière logique, à une seule interface de communication physique, en tant qu'interface d'entrée/sortie.

Les quatre points d'accès comportent :
- un premier point 212 d'accès associé au numéro 80 identifiant un service dédié utilisant un protocole HTTP (acronyme pour « Hypertext Transfer Protocol » en langue anglaise),
- un deuxième point 214 d'accès associé au numéro 23 identifiant un service dédié utilisant un protocole « Telnet » (acronyme pour « TELetype Network » en langue anglaise),
- un troisième point 216 d'accès associé au numéro 21 identifiant un service dédié utilisant un protocole FTP (acronyme pour « File Transfer Protocol» en langue anglaise), et
- un quatrième point 218 d'accès associé au numéro 443 identifiant un service dédié à la configuration de la carte 2 SIM et utilisant un protocole HTTPS (acronyme pour « Hypertext Transfer Protocol Secured» en langue anglaise).

Chaque point d'accès à un service applicatif est susceptible de recevoir, depuis une entité externe à la carte 2 SIM, telle le téléphone 1 portable ou à travers ce dernier, en provenance d'une autre entité à laquelle le téléphone 1 portable est relié, une requête de connexion propre à un service applicatif associé au service centralisateur.

Chaque service, constituant soit le service centralisateur soit l'un quelconque des services applicatifs, nécessite une allocation d'un espace mémoire pour être exécuté.

Le service centralisateur est ainsi exécuté et permet d'attendre une réception, par chacun des quatre points 212, 214, 216, 218 d'accès associés au service centralisateur, d'une requête de connexion à un service applicatif offert par la carte 2 SIM.

Pour ce faire, par exemple au démarrage de la carte 2 SIM, le service centralisateur réserve, de manière dynamique, les quatre points 212, 214, 216, 218 d'accès pouvant l'activer, excluant leur association à tout autre service applicatif. Du fait de l'association du service centralisateur aux quatre points d'accès, un accès direct aux services applicatifs associés aux quatre points 212, 214, 216, 218 d'accès est interdit.

Une requête de connexion à un service applicatif, qui est reçue par un des quatre points d'accès associé au service centralisateur, réveille le service centralisateur ainsi pointé par une telle réservation d'accès. C'est le service centralisateur qui traite toute requête de connexion reçue par l'un quelconque des quatre points 212, 214, 216, 218 d'accès.

Pour la réception d'une requête de connexion à un service applicatif, le deuxième espace 220 mémoire relatif au service centralisateur est alors le seul à être mobilisé tant qu'aucune requête de connexion n'est reçue par l'un des quatre points 212, 214, 216, 218 d'accès associés au service centralisateur.

Le service centralisateur est associé, au travers d'une première interface de programmation des applications ou API (acronyme pour « Application Programming Interface » en langue anglaise) de la carte 2 SIM, à chacun des quatre services applicatifs accessibles depuis le réseau de communication externe à la carte 2 SIM.

En outre, le service centralisateur est associé, au travers d'une deuxième interface de programmation API, à chacun des quatre points 212, 214, 216, 218 d'accès respectivement associés à un des quatre services applicatifs.

Le service centralisateur est chargé soit, de manière statique, à l'origine, lors de l'initialisation de la carte 2 SIM en usine de fabrication, ou bien lors d'un téléchargement, par exemple « OTA » (pour « Over the Air » en langue anglaise), soit, de manière dynamique, au moment où un service applicatif supplémentaire ou une mise à jour d'un service applicatif déjà présent dans la carte 2 SIM est chargée. En ce qui concerne le téléchargement d'un autre service applicatif à introduire dans la carte 2 SIM, un ou des paramètres propres au point d'accès existant dans la carte 2 SIM est associé d'abord au service applicatif considéré, puis au service centralisateur devant traiter la réception d'une requête de connexion correspondante.

Le langage « C » de programmation est, par exemple, utilisé pour le service 210 de communication. Le langage de programmation est, de préférence, un langage objet, tel Java, pour le service 220 centralisateur et les services applicatifs particuliers, afin d'assurer une portabilité aux services applicatifs ainsi offerts sur différents systèmes d'exploitation ou OS (acronyme pour « Operating System » en langue anglaise).

La carte 2 SIM incorpore un espace mémoire alloué pour exécuter chaque service applicatif.

Seul, un flux d'exécution du service centralisateur est donc enregistré au niveau du système d'exploitation de la carte 2 SIM, pour gérer la réception de requêtes de connexion relatives aux services applicatifs disponibles dans la carte 2 SIM et reçues par ses points 212, 214, 216, 218 d'accès.

Une telle centralisation du traitement de la réception de requêtes de connexion aux services applicatifs émises depuis le réseau externe de la carte 2 SIM minimise la quantité des ressources mémoire mises en jeu dynamiquement au sein de la carte 2 SIM.

Tant qu'aucun point d'accès n'a reçu de requête d'exécution d'un service applicatif supporté par la carte 2 SIM, seul un flux d'exécution propre au service centralisateur est en cours d'exécution, et non pas l'un ou plusieurs des services applicatifs offerts par la carte 2 SIM.

Le service 220 centralisateur est utilisé, d'une part, pour faire converger les requêtes de connexion de services applicatifs reçues, et d'autre part, pour faire distribuer, par l'intermédiaire du ou des points d'accès y associés, d'éventuelle(s) autre(s) information(s) ultérieure(s), telles que des requêtes d'exécution des services applicatifs ainsi connectés, au(x) service(s) applicatif(s) requis.

Ainsi, lorsqu'il existe une requête de connexion reçue par l'un des points d'accès associés au service 220 centralisateur, le service 220 centralisateur recherche, dans une table de correspondance de services applicatifs associés, le service applicatif correspondant potentiellement activable.

Le service 220 centralisateur instancie (ou crée) alors un flux d'exécution, pour pouvoir exécuter le service applicatif identifié puis connecté, et ce au moyen de paramètres correspondant, entre autres, au service applicatif connecté transmis par le service 220 centralisateur. Durant l'attente d'une potentielle requête d'exécution du service connecté correspondant, aucun espace mémoire correspondant n'est mobilisé pour l'exécution. Une telle attente du service applicatif connecté ne laisse donc aucune « empreinte ».

Lorsqu'une requête d'exécution correspondante est effectivement reçue, un flux d'exécution correspondant est alors activé et traite la requête d'exécution. Le flux d'exécution associé exécute alors le service applicatif requis.

Selon le mode de réalisation représenté, le service 220 centralisateur réserve un espace 240, 250, 260 et 270 mémoire pour l'exécution d'un flux d'exécution propre à chaque service applicatif disponible au sein de la carte 2 SIM, pour une session donnée. Une flèche part de chacun des espaces 222, 224, 226 et 228 mémoire associés aux quatre services applicatifs au sein du service 220 centralisateur et pointe un espace mémoire alloué à un flux d'exécution affecté pour chaque service applicatif disponible. Les quatre flèches pointant les espaces 240, 250, 260 et 270 mémoire sont représentées en pointillés, pour montrer que de telles flèches sont repositionnables. Ainsi, plusieurs flèches peuvent partir d'un même espace mémoire associé, au sein du service 220 centralisateur, à un premier service applicatif et pointer plusieurs espaces mémoire alloués à plusieurs flux d'exécution affectés au même premier service applicatif.

Une fois le service applicatif concerné exécuté, l'espace mémoire d'exécution propre au flux d'exécution même est libéré, de même que la ou les espaces mémoire (non représentés) propres aux fonctions appelées par le service applicatif. De tels espaces mémoire se trouvent alors disponibles pour une nouvelle exécution.

Pour ce faire, c'est, à nouveau, le service 220 centralisateur qui permet de distribuer d'éventuelle(s) autre(s) information(s) ultérieure(s), tel qu'une ou plusieurs nouvelles requêtes d'exécution du service applicatif connecté.

Selon un autre mode de réalisation (non représenté), le service 220 centralisateur réserve quatre espaces 240, 250, 260 et 270 mémoire pour l'exécution d'un flux d'exécution relatif à l'exécution d'une partie seulement des services applicatifs disponibles au sein de la carte 2 SIM, par exemple pour une autre session. Pour ce faire, deux, trois ou quatre flèches (non représentées) peuvent partir d'un même espace 222 mémoire associé, au sein du service 220 centralisateur, à un premier service applicatif, et pointer respectivement deux, trois ou quatre espaces mémoire où chacun est alloué à un flux d'exécution affecté au seul premier service applicatif.

Les quatre services applicatifs disponibles au sein de la carte 2 SIM correspondent à l'exécution de programmes correspondants sauvegardés dans une mémoire de type « ROM » (pour « Programmable Read-Only Memory » en langue anglaise) (non représentée).

Le service 210 de communication vérifie préalablement que :
- l'expéditeur d'une requête de connexion à un service applicatif offert par la carte 2 SIM dispose effectivement des droits d'accès, par exemple afin de protéger l'accès vis-à-vis d'un expéditeur fraudeur ; et/ou
- le destinataire correspond à un service applicatif associé au service 220 centralisateur compris au sein de la carte 2 SIM.

En revanche, c'est le service 220 centralisateur qui vérifie que toute requête de connexion à un service applicatif associé correspond bien à un service applicatif offert par la carte 2 SIM.

Les différents points 212, 214, 216, 218 d'accès aux services applicatifs accessibles depuis le réseau externe, les liens de ces points au service centralisateur et le service 220 centralisateur sont mémorisés, de manière dynamique, dans une mémoire de type RAM (acronyme pour « Random Access Memory » en langue anglaise) ou de type FRAM (acronyme pour « Ferroelectric Random Access Memory » en langue anglaise) ou de type MRAM (acronyme pour « Magnetoresistive Random Access Memory » en langue anglaise) ou de type EEPROM (acronyme pour « Electrically Erasable Programmable Read-Only Memory » en langue anglaise) ou encore de tout autre type équivalent.

L'exécution du flux d'exécution propre au service 220 centralisateur a lieu, par l'intermédiaire d'une sauvegarde de données propres au contexte du flux d'exécution à exécuter, au sein d'un espace mémoire, dont la mémoire est par exemple de type RAM. Le contexte inclut, en particulier, l'état du flux d'exécution du service centralisateur, à savoir par exemple l'attente d'une réception d'une requête de connexion à un service applicatif, les valeurs de registres du microprocesseur 202 avant l'exécution proprement dite du service centralisateur et les données temporaires à sauvegarder pendant l'exécution du service centralisateur.

Lorsqu'une requête de connexion à un service applicatif a été reçue, le service 220 centralisateur effectue une recherche du service en charge du traitement du service applicatif requis.

Ce qui vient d'être énoncé, juste ci-dessus, pour l'exécution du flux d'exécution du service centralisateur est également valable pour l'exécution d'un flux d'exécution relatif à un service applicatif disponible au sein de la carte 2 SIM.

Plus exactement, l'exécution du flux d'exécution propre à un des quatre services applicatifs est associée à un contexte d'exécution propre au flux d'exécution à exécuter au sein d'un espace mémoire. La mémoire est également, par exemple, de type RAM. Le contexte inclut, en particulier, l'état du flux d'exécution du service applicatif, à savoir, par exemple, les valeurs de registres du microprocesseur 202 avant l'exécution proprement dite du service applicatif concerné et les données temporaires à sauvegarder pendant l'exécution du service applicatif.

Le serveur de la carte 2 SIM héberge plusieurs services applicatifs particuliers, qui sont seulement accessibles au travers du service 220 centralisateur.

Chaque service applicatif particulier nécessite, d'abord, une requête de connexion au service considéré, qui est traitée par le service 220 centralisateur, puis, une éventuelle requête d'exécution transmise par le client distant au travers d'une connexion TCP/IP ouverte.

S'il n'existe pas, au sein de la carte 2 SIM, un service correspondant au service applicatif ayant fait l'objet d'une requête de connexion, soit aucune réponse n'est émise depuis la carte 2 SIM vers le client distant soit une simple réponse indiquant par un message approprié qu'aucun service applicatif correspondant n'existe au sein de la carte 2 SIM.

Si, au contraire, il existe un service applicatif correspondant à un service applicatif ayant fait l'objet d'une requête de connexion, le service 220 centralisateur crée un flux d'exécution pour exécuter le service applicatif sélectionné correspondant.

La carte 2 SIM exécute le flux d'exécution du service applicatif requis.

Puis, la carte 2 SIM transmet, éventuellement, une réponse au client distant ayant émis la requête de connexion correspondante. Une telle réponse peut consister en la transmission d'un fichier de données crypté selon un algorithme de cryptage connu également du client distant.

On comprend que le flux d'exécution propre à un service applicatif correspondant est créé uniquement lorsqu'une requête de connexion au service a été d'abord traitée par le service 220 centralisateur. Ainsi, chaque service applicatif disponible sur la carte 2 SIM est activé, par l'intermédiaire du service 220 centralisateur, avec la requête de connexion au service applicatif correspondant en tant que paramètre.

Le service 220 centralisateur comprend, pour ce faire, un identifiant de chaque service applicatif disponible dans la carte 2 SIM qu'il peut activer suite à un lien généré dynamiquement par le service 220 centralisateur. En outre, le service 220 centralisateur permet de pointer le service applicatif ayant fait l'objet d'une requête de connexion.

Les quatre services applicatifs particuliers sont illustrés en pointillé, pour indiquer que chaque service est potentiellement activable, uniquement, par l'intermédiaire du service 220 centralisateur, et ce après avoir reçu une requête de connexion au service en question. L'activation du service applicatif n'est opérée, pour certains services applicatifs, qu'après avoir reçu une requête d'exécution correspondante.

Dans l'exemple décrit, un espace 222, 224, 226, 228 mémoire de service est respectivement associé, au sein du service 220 centralisateur, à chaque service applicatif particulier.

Le nombre de connexion en cours relatif à des services applicatifs gérés par l'intermédiaire du service 220 centralisateur est sauvegardé, au sein d'un espace 229 mémoire prévu à cet effet, en tant que compteur dit global pour le service centralisateur. La valeur du compteur global doit rester inférieure ou égale à un nombre maximal de connexions en cours gérées par l'intermédiaire du service 220 centralisateur.

De même, pour chaque service applicatif géré par le service centralisateur, le nombre de connexions en cours pour le service applicatif concerné est sauvegardé, au sein d'un espace 232, 234, 236, 238 mémoire associé, en tant que compteur individuel du nombre de connexions en cours. La valeur de chaque compteur individuel doit rester inférieure ou égale à un flux d'exécution en cours, par défaut, pour le service applicatif considéré géré via le service 220 centralisateur.

Ainsi, pour chaque service applicatif, un compteur individuel du nombre de connexions en cours au sein d'un espace 232, 234, 236 et 238 mémoire prévu respectivement à cet effet. Le compteur global propre au service 220 centralisateur effectue la somme des valeurs de compteurs individuels propres aux différents services applicatifs gérés par le service centralisateur. La valeur du compteur global ne doit pas dépasser, pour l'exemple choisi, quatre, tout en ayant au plus un flux d'exécution en cours pour un service applicatif donné.

Optionnellement, de la même façon, un compteur global est associé, au sein d'un espace mémoire (non représenté) prévu à cet effet, au niveau du service 210 de communication, pour compter le nombre de requêtes de connexion aux services applicatifs associés au service centralisateur. La valeur de ce compteur global doit rester inférieure ou égale à un nombre maximal de requêtes de connexion reçues et gérées via le service 220 centralisateur. La valeur de ce compteur global ne doit pas dépasser, pour l'exemple choisi, quatre requêtes de connexion reçues.

Lorsqu'une requête de connexion a été reçue pour chacun des quatre services applicatifs, le nombre maximal de flux d'exécution en cours pour les services applicatifs associés au service 220 centralisateur et le nombre maximal de connexions pour chaque service applicatif ont été respectivement atteints au niveau des compteurs 229 global et 232, 234, 236, 238 individuels.

Du fait de l'exécution en cours du service 220 centralisateur en parallèle des quatre services applicatifs, l'espace mémoire résultant d'une exécution pseudo-simultanée des quatre services mis en jeu est proportionnel à cinq services.

Toute autre requête de connexion à un service applicatif qui est reçue et implique indirectement un dépassement du nombre maximal de flux d'exécution en cours est alors refusée par le service 220 centralisateur.

Selon un autre mode de réalisation, le nombre de flux d'exécution en cours d'exécution pour un service applicatif donné, dit nombre maximal individuel, ayant fait préalablement l'objet d'une requête de connexion correspondante, est supérieur à un, et par exemple égal à 4.

Ainsi, selon un tel mode, le même service applicatif peut mobiliser toutes les espaces mémoire relatifs à l'exécution de flux d'exécution en cours. Lorsque le nombre maximal individuel de flux d'exécution en cours pour le service applicatif considéré est atteint, alors toute autre requête de connexion au service applicatif qui est reçue et gérée par le service centralisateur est alors refusée par ce même service centralisateur.

Une fois que les services applicatifs ont été exécutés, les espaces 240, 250, 260 et 270 mémoire associés pour l'exécution de tels services applicatifs sont libérés.

Lorsqu'un service applicatif particulier supplémentaire (non représenté) est à ajouter, le service applicatif supplémentaire est, d'abord, chargé ou téléchargé au sein de la carte 2 SIM. Un point d'accès supplémentaire correspondant est créé, au sein du service 210 de communication au réseau, en lui associant un nouvel identifiant de service correspondant, puis, le service 220 centralisateur rajoute dans sa table de correspondance, comme « pointeur », un tel identifiant de service correspondant. Ainsi, la carte 2 SIM peut recevoir une requête de connexion à ce service supplémentaire, le service 220 centralisateur peut attendre également une requête de connexion relative à ce service supplémentaire. Lorsque le point d'accès supplémentaire a reçu une requête de connexion correspondante, le service 220 centralisateur informe de la commutation alors le service applicatif supplémentaire, en pointant un flux d'exécution correspondant relatif au service applicatif particulier supplémentaire ajouté. Le service applicatif supplémentaire est exécuté. Une fois que le service applicatif supplémentaire a été exécuté, le service 220 centralisateur peut terminer en clôturant le flux d'exécution du service supplémentaire exécuté en libérant, de ce fait, l'espace mémoire utilisé pour son exécution.

On présente, maintenant, en relation avec la figure 3, un mode de réalisation particulier du procédé, selon l'invention, pour exécuter au moins un programme relatif à au moins un service compris au sein de la carte 2 SIM, en tant que dispositif électronique embarqué.

Tout d'abord, lors d'une première étape 300, au démarrage, l'ensemble des quatre points d'accès accessibles depuis le réseau externe de la carte SIM est associé à un service centralisateur géré au sein de la carte SIM.

Pour ce faire, un identifiant propre à un service applicatif offert est associé à chaque point d'accès dans une liste persistante du service centralisateur.

Chaque service applicatif est ainsi sélectionnable par un client distant par l'intermédiaire de son identifiant via le point d'accès associé. Une telle sélection reste valable même si la carte SIM est extraite du téléphone portable avec lequel la carte SIM coopère, du fait de l'existence de la liste persistante au sein du service centralisateur.

II est à noter que, par souci de simplification, seule une chaîne de traitement propre à un point d'accès a été plus particulièrement décrite ci-dessous.

Lors d'une étape 310 suivante, pour l'ensemble des quatre points d'accès à un service applicatif respectif de la carte 2 SIM, un flux d'exécution dédié au service centralisateur est le seul en cours d'exécution.

Le service centralisateur en cours d'exécution permet d'attendre une requête de connexion émise depuis un client distant sur chacun des points d'accès associés.

Le client distant appartient au réseau de communication externe à la carte 2 SIM et est susceptible de requérir l'exécution d'un service applicatif.

On comprend qu'aucun des services applicatifs associés aux points d'accès n'est exécuté et ne mobilise un espace mémoire correspondant pour la réception d'une requête de connexion correspondante.

Ainsi, seul le service centralisateur est exécuté et mobilise un espace mémoire pour la réception d'une requête de connexion sur l'un des points d'accès auxquels le service centralisateur a été associé.

Tant qu'une requête de connexion n'a pas été reçue par un point d'accès dédié à un service applicatif et associé au service centralisateur, alors la carte 2 SIM reste dans le même état, en rebouclant sur la même étape 310 d'attente.

Dès qu'une requête de connexion a été reçue par un des points d'accès associé au service centralisateur, on passe alors à une étape 320 de vérification d'existence du service requis à la connexion effectuée par le service de communication.

Si le service de communication traite la requête de connexion à un service dont l'identifiant ne correspond à aucun des identifiants de services applicatifs offerts par la carte SIM, alors le service de communication refuse 322 la connexion. Le service de communication informe éventuellement le client distant, à l'origine de la requête de la connexion traitée, qu'il n'existe aucun service pour lequel il a reçu une requête de connexion. Puis, le service de communication clôture 324 la connexion requise, avant de reboucler sur l'étape 310 d'attente d'une ou plusieurs requêtes de connexion à un ou plusieurs services applicatifs.

Au contraire, si le service de communication a reconnu que la requête de connexion reçue correspond à un service applicatif offert par la carte SIM et accepte la connexion requise, alors on passe à une étape 330 suivante prise en charge par le service centralisateur.

Si aucune requête de connexion dédiée à un service applicatif associé au service centralisateur n'est reçue, seul le service centralisateur est exécuté et génère des données à sauvegarder au sein d'un espace mémoire alloué dynamiquement. Ainsi, tant que la carte SIM ne reçoit pas de requête de connexion à un service applicatif qu'elle offre au réseau externe, seul le flux d'exécution du serveur centralisateur est en cours d'exécution à un instant donné.

Après avoir reçu une requête de connexion propre à un service applicatif, le service centralisateur vérifie 330 la disponibilité du service requis à la connexion.

Si le service applicatif dont une requête en connexion a été reçue n'est pas disponible, alors le service centralisateur refuse 332 l'ouverture de la connexion. Pour refuser l'ouverture de la connexion requise, le service centralisateur peut transmettre une information correspondante au client distant à l'origine de la requête de connexion.

II peut s'agir, par exemple, du message de remise à l'état initial (ou « reset » en langue anglaise) du protocole TCP/IP. La non-disponibilité du service applicatif peut être due à une ou plusieurs contraintes non satisfaites.

De telles contraintes consistent en un nombre maximal de connexions ouvertes simultanément, en tant que valeur seuil dite globale, pour le service centralisateur gérant les connexions associées et/ou qu'un nombre maximal de connexions en cours, en tant que valeur seuil dite individuelle, pour le service applicatif concerné. Puis, lorsque de telles contraintes n'ont pas été satisfaites, le service centralisateur clôture 334 la connexion, avant de reboucler sur l'étape 310 d'attente d'une ou plusieurs requêtes de connexion à un ou plusieurs services applicatifs.

De manière optionnelle, si le service applicatif est disponible, c'est-à-dire que la ou les contraintes de disponibilité sont effectivement satisfaites, alors le service centralisateur déclenche 340 une temporisation. Une telle temporisation permet de décompter une période prédéfinie pour la réception d'une ou plusieurs requêtes de connexion aux services applicatifs par les points d'accès associés. Le service centralisateur définit un ordre de séquencement du traitement des requêtes de connexion à des services applicatifs reçues, pour une période définie avant le déclenchement de la temporisation, pour l'ensemble des points d'accès y associés. La période est, par exemple, de quelques dizaines de millisecondes en fonction de priorités configurées dans la carte SIM. Une telle période peut être définie de sorte que l'utilisateur de la carte SIM ne perçoit aucun ralentissement ou arrêt dans le traitement d'au moins un service en cours d'exécution au sein de la carte SIM.

Puis, on passe à une étape suivante durant laquelle le service centralisateur autorise 340 une instanciation d'une valeur maximale de flux d'exécution de services applicatifs de manière simultanée, par exemple égale à 4, outre le flux d'exécution propre au service centralisateur lui-même. Ainsi, le nombre de flux d'exécution en cours à instant donné ne peut excéder la valeur maximale pour l'exécution des services applicatifs.

Il est à noter qu'un nombre de requêtes de connexion supérieur à une unité à un même service applicatif connecté est possible. Pour ce faire, par exemple, une fonction de ré-entrance par une instruction dédiée de protection de chaque variable à conserver, telle « lock (b) », est utilisée. Ainsi, plusieurs flux d'exécution d'un même service applicatif connecté sont simultanément en cours d'exécution, tout en restant cohérent pour la valeur d'une ou plusieurs variables avant l'exécution d'un autre flux d'exécution de ce même service applicatif.

Dans l'hypothèse où une requête de connexion pour chaque service applicatif a été successivement reçue dans la période de temps prédéfinie, l'ordre de séquencement prédéfini est, dans l'ordre de degré de priorité décroissant du traitement des quatre requêtes de connexion pour les services applicatifs offerts, le suivant :
- un service applicatif identifié « httpd : 80», en tant que rang le plus prioritaire,
- un service applicatif identifié « telnet : 23»,
- un service applicatif identifié « ftp : 21 », suivi
- un service applicatif identifié « https : 443», en tant que rang le moins prioritaire.

Tant que la valeur maximale de flux d'exécution de services applicatifs en cours n'est pas atteinte, le service centralisateur ouvre 350 une connexion au service applicatif dernièrement requis. De plus, le service centralisateur incrémente d'une unité la valeur du compteur global relatif au nombre de connexions ouvertes, pour l'ensemble des points d'accès.

Ensuite, le service centralisateur instancie 360 un flux d'exécution au service applicatif qui vient de faire l'objet d'une requête de connexion. Dans le même temps, le service centralisateur incrémente, d'une unité, la valeur du compteur individuel relatif au nombre de requêtes de connexion en cours pour le service applicatif en question.

Le service centralisateur transmet à l'ordonnanceur, l'ordre de priorité d'exécution pour les services applicatifs y associés. L'ordonnanceur établit alors une stratégie d'exécution, qui tient compte d'un tel ordre de priorité d'exécution pour activer ou inactiver un ou plusieurs flux d'exécution. Une telle stratégie d'exécution se traduit par une répartition temporelle d'exécution adaptée entre l'ensemble des services applicatifs à exécuter.

Le scénario suivant contrôlé par l'ordonnanceur est alors possible. Une partie d'un flux d'exécution propre à un premier service applicatif en cours est exécutée. Puis, une partie d'un autre flux d'exécution propre à un deuxième service applicatif plus prioritaire est, à son tour, exécutée, avant de revenir sur l'exécution d'une autre partie du flux d'exécution propre au premier service applicatif. Ensuite, l'ordonnanceur bascule, à nouveau, sur l'exécution d'une autre partie du flux d'exécution propre au deuxième service applicatif. L'ordonnanceur effectue autant de basculements que nécessaire, en fonction, par exemple, de la nature des fonctions appelées par chaque service applicatif en cours d'exécution, jusqu'à avoir géré l'exécution totale d'abord du flux d'exécution propre au deuxième service applicatif suivie de celle du flux d'exécution propre au premier service applicatif moins prioritaire.

A défaut, aucun ordre de priorité d'exécution des services applicatifs n'est indiqué à l'ordonnanceur et un ou des flux d'exécution correspondants sont alors respectivement exécutés, à nouveau, ou exécutés dans l'ordre d'arrivée chronologique des requêtes de connexion associées aux services applicatifs à exécuter.

De manière optionnelle, par exemple lorsque le nombre maximal de flux d'exécution en cours pour l'exécution des services applicatifs est atteint, la carte SIM déroute un flux d'exécution depuis le service centralisateur vers le service applicatif pour lequel une requête de connexion a été reçue, afin que le flux d'exécution dérouté exécute le service applicatif sans mobiliser de ressources en mémoire supplémentaires. Une fois le service applicatif exécuté, la carte SIM déroute le flux d'exécution affecté depuis le service applicatif vers le service centralisateur. Ainsi, le service centralisateur reprend son exécution là où il l'avait quittée. Le service centralisateur utilise de la sorte son propre flux d'exécution pour exécuter un service applicatif. L'exécution du service applicatif mobilise donc au moins la ou les espaces mémoire alloués à l'exécution du service centralisateur.

Pour ce faire, il peut s'agir, pour une programmation en langage orienté objet, d'un appel de méthode, permettant de dérouter l'exécution du service centralisateur vers le service applicatif requis et inversement.

Puis, la carte SIM exécute 370 le flux d'exécution affecté.

Selon une variante de réalisation (non représentée), lors d'une étape suivante, le service applicatif ayant fait l'objet d'une requête en connexion correspondante, ou service applicatif connecté, attend la réception d'une requête d'exécution correspondante, pour les services applicatifs propres aux services de type http, ftp et https.

On rappelle qu'un service applicatif utilisant le protocole « Telnet » ne nécessite pas de requête d'exécution correspondante pour être exécuté. En d'autres termes, seule une requête de connexion au service applicatif utilisant le protocole « Telnet » est nécessaire pour son exécution.

Ensuite, le flux d'exécution dernièrement affecté exécute 380 le service applicatif connecté. L'exécution du service applicatif connecté génère alors éventuellement une réponse transmise à destination du client l'ayant requis.

Dans l'hypothèse où le service centralisateur détecte la réception d'une requête de connexion à un autre service applicatif plus prioritaire que celui pour lequel un flux d'exécution correspondant est en cours, l'ordonnanceur suspend le flux d'exécution affecté exécutant le service applicatif moins prioritaire. Et, un autre flux d'exécution instancié exécute alors le service plus prioritaire connecté. Dès que le service plus prioritaire a été exécuté, l'ordonnanceur reprend le contrôle et permet l'exécution du service moins prioritaire des deux au niveau où l'exécution du service moins prioritaire a été suspendue.

L'exécution du service applicatif requis terminée, l'espace mémoire alloué correspondant au flux d'exécution affecté est libéré 390.

Enfin, la connexion ouverte via le point d'accès associé au service applicatif identifié est clôturée 3100, avant de reboucler sur l'étape 310 d'attente d'une ou plusieurs requêtes de connexion à un ou plusieurs services applicatifs.

Le mode de réalisation présenté ci-dessus n'a pas pour objet de réduire la portée de l'invention, il peut donc y être apporté de nombreuses modifications sans sortir pour autant du cadre de celle-ci. En quelques mots, on peut prévoir, comme illustré dans le mode de réalisation qui vient d'être présenté, un dispositif électronique embarqué, dans lequel seul le service centralisateur dispose d'un espace mémoire alloué pour la réception de requêtes de connexion pour les services associés par l'intermédiaire du service centralisateur.

On peut également prévoir, un dispositif électronique embarqué, dans lequel, non seulement un service centralisateur est associé à plusieurs points d'accès à des services depuis un réseau de communication externe, mais également, au moins un autre point d'accès associé à un service directement accessible (c'est-à-dire non associé au service centralisateur), le service centralisateur et le service directement accessible disposent d'un espace mémoire alloué alors « double par rapport au mode de réalisation présenté » pour la réception de requêtes de connexion entrantes. Plus exactement, le service centralisateur mobilise un premier espace mémoire alloué pour la réception de requêtes de connexion associées aux services propres aux points d'accès associés au service centralisateur. De même, le service directement accessible et associé directement à un autre point d'accès que ceux associés au service centralisateur mobilise, en parallèle, un deuxième espace mémoire alloué pour la réception d'une requête de connexion correspondante.

## Revendications

1. Procédé pour exécuter au moins un programme relatif à au moins un service compris au sein d'un dispositif (2) électronique embarqué, chaque service nécessitant une allocation d'un espace mémoire pour être exécuté, le dispositif (2) électronique embarqué comprenant au moins un espace mémoire destiné à être alloué pour exécuter au moins l'un des services, et au moins deux points (212, 214, 216, 218) d'accès pour accéder respectivement à des services (240, 250, 260, 270) applicatifs accessibles depuis un réseau de communication externe au dispositif (2) électronique embarqué,
**caractérisé en ce que** le procédé comprend les étapes suivantes :
- le dispositif (2) électronique embarqué associe un service (220) centralisateur à au moins deux (212, 214, 216, 218) desdits au moins deux points (212, 214, 216, 218) d'accès;
- le dispositif (2) électronique embarqué alloue un espace mémoire à un service pour la réception d'une requête de connexion à un desdits services ;
- le dispositif (2) électronique embarqué exécute le service (220) centralisateur, l'exécution du service (220) centralisateur permettant d'attendre une réception, par au moins l'un des points (212, 214, 216, 218) d'accès associés au service (220) centralisateur, d'au moins une requête de connexion dédiée à l'un des services (240, 250, 260, 270) applicatifs ;
et, dans lequel, en l'absence de réception d'une requête de connexion à un service, le seul service disposant d'un espace mémoire alloué est le service (220) centralisateur.

2. Procédé selon la revendication 1, dans lequel le procédé comprend les étapes suivantes :
- au moins un point (212, 214, 216, 218) d'accès associé au service (220) centralisateur reçoit au moins une requête de connexion dédiée à un service (240, 250, 260, 270) applicatif ;
- le service (220) centralisateur est activé pour chaque requête de connexion reçue et dédiée à un service (240, 250, 260, 270) applicatif ; et
- le service (220) centralisateur traite chaque requête de connexion reçue et dédiée à un service (240, 250, 260, 270) applicatif.

3. Procédé selon la revendication 2, dans lequel le procédé comprend l'étape suivante :
- le service (220) centralisateur limite à au plus un nombre maximum d'au moins un flux d'exécution simultanément en cours,
de façon que le nombre de services (240, 250, 260, 270) applicatifs en cours d'exécution à un instant donné est inférieur ou égal au nombre maximum de flux d'exécution.

4. Procédé selon la revendication 2 ou 3, dans lequel le procédé comprend les étapes suivantes :
- le dispositif (2) électronique embarqué pré-instancie au plus un nombre maximum d'au moins un flux d'exécution simultanément en cours,
- le dispositif (2) électronique embarqué affecte un flux d'exécution à chaque service (240, 250, 260, 270) applicatif pour lequel une requête de connexion a été reçue, dit service applicatif connecté ;
- le dispositif (2) électronique embarqué exécute le flux d'exécution affecté ;
- le flux d'exécution affecté exécute, au moins en partie, chaque service (240, 250, 260, 270) applicatif connecté.

5. Procédé selon la revendication 4, dans lequel le procédé comprend les étapes suivantes :
- le service (220) centralisateur détecte la réception d'une requête de connexion à un service applicatif plus prioritaire qu'un service applicatif pour lequel un flux d'exécution correspondant est en cours ;
- le service (220) centralisateur affecte un nouveau flux d'exécution pré-instancié au service applicatif plus prioritaire connecté ;
- le service (220) centralisateur transmet, à un ordonnanceur (230) de flux d'exécution, au moins une information relative à l'ordre de priorité d'exécution des flux d'exécution ;
- l'ordonnanceur (230) active ledit nouveau flux d'exécution affecté au service applicatif plus prioritaire connecté ;
- l'ordonnanceur (230) suspend le flux d'exécution affecté exécutant le service applicatif moins prioritaire ;
- ledit nouveau flux d'exécution affecté exécute le service applicatif plus prioritaire connecté ;
- l'ordonnanceur (230) active le flux d'exécution affecté au service applicatif moins prioritaire ; et
- l'ordonnanceur (230) reprend l'exécution du service applicatif moins prioritaire au niveau où l'exécution du service applicatif moins prioritaire a été suspendue.

6. Procédé selon la revendication 2 ou 3, dans lequel le procédé comprend, pour chaque requête de connexion reçue, les étapes suivantes :
- le service (220) centralisateur instancie un flux d'exécution ;
- le service (220) centralisateur affecte le flux d'exécution instancié à un service (240, 250, 260, 270) applicatif pour lequel une requête de connexion a été reçue, dit service applicatif connecté ;
- le dispositif (2) électronique embarqué exécute le flux d'exécution affecté ;
- le flux d'exécution affecté exécute, au moins en partie, le service applicatif connecté.

7. Procédé selon la revendication 6, dans lequel le procédé comprend les étapes suivantes :
- le service (220) centralisateur détecte la réception d'une requête de connexion à un service applicatif plus prioritaire qu'un service applicatif pour lequel un flux d'exécution correspondant est en cours ;
- le service (220) centralisateur instancie un nouveau flux d'exécution ;
- le service (220) centralisateur affecte ledit nouveau flux d'exécution instancié au service applicatif plus prioritaire connecté ;
- le service (220) centralisateur transmet, à un ordonnanceur (230) de flux d'exécution de services applicatifs dudit dispositif (2) électronique embarqué, au moins une information relative à l'ordre de priorité d'exécution des flux d'exécution ;
- l'ordonnanceur (230) active ledit nouveau flux d'exécution affecté au service applicatif plus prioritaire connecté ;
- l'ordonnanceur (230) suspend le flux d'exécution affecté exécutant le service applicatif moins prioritaire ;
- ledit nouveau flux d'exécution affecté exécute le service applicatif plus prioritaire connecté ;
- l'ordonnanceur (230) active le flux d'exécution affecté au service applicatif moins prioritaire ; et
- l'ordonnanceur (230) reprend l'exécution du service applicatif moins prioritaire au niveau où l'exécution du service applicatif moins prioritaire a été suspendue.

8. Procédé selon la revendication 2 ou 3, dans lequel, au moins un flux d'exécution étant affecté au service (220) centralisateur, le dispositif (2) électronique embarqué exécutant le flux d'exécution affecté, le procédé comprend les étapes suivantes :
- le service (220) centralisateur déroute le flux d'exécution depuis le service (220) centralisateur vers le service (240, 250, 260, 270) applicatif pour lequel une requête de connexion a été reçue, dit service applicatif connecté ;
- le flux d'exécution exécute le service (240, 250, 260, 270) applicatif connecté ; et
- le flux d'exécution reprend l'exécution du service (220) centralisateur au niveau où l'exécution du service (220) centralisateur a été dérouté.

9. Procédé selon l'une des revendications 3 à 8, dans lequel, au moins une requête de connexion dédiée à un service (240, 250, 260, 270) applicatif ayant été reçue au sein d'une période de temps prédéterminée par lesdits au moins deux points (212, 214, 216, 218) d'accès associés au service (220) centralisateur, le procédé comprend une étape de définition, par l'intermédiaire du service (220) centralisateur, d'un ordre de séquencement du traitement des requêtes de connexion à des services (240, 250, 260, 270) applicatifs reçues.

10. Procédé selon l'une des revendications précédentes, dans lequel chaque service (240, 250, 260, 270) applicatif est compris au sein du groupe comprenant :
- les services de type « Hypertext Transfer Protocol » ;
- les services de type « Hypertext Transfer Protocol Secured» ;
- les services de type « telnet » ;
- les services de type « File Transfer Protocol ».

11. Dispositif (2) électronique embarqué, le dispositif (2) électronique embarqué comprenant au moins un programme relatif à au moins un service, chaque service nécessitant une allocation d'un espace mémoire pour être exécuté, le dispositif (2) électronique embarqué comprenant au moins un espace mémoire destiné à être alloué pour exécuter au moins l'un des services, et au moins deux points (212, 214, 216, 218) d'accès pour accéder respectivement à des services (240, 250, 260, 270) applicatifs accessibles depuis un réseau de communication externe au dispositif (2) électronique embarqué,
**caractérisé en ce que** le dispositif (2) électronique embarqué comprend :
- des moyens d'association d'un service (220) centralisateur auxdits deux (212, 214, 216, 218) desdits au moins deux points (212, 214, 216, 218) d'accès ;
- des moyens d'allocation d'un espace mémoire à un service à la réception d'une requête de connexion à un service,
- des moyens d'exécution du service (220) centralisateur permettant d'attendre une réception, par au moins l'un des points (212, 214, 216, 218) d'accès associés au service (220) centralisateur, d'au moins une requête de connexion dédiée à l'un des services (240, 250, 260, 270) applicatifs,
et, dans lequel, en l'absence de réception d'une requête de connexion à un service, le seul service disposant d'un espace mémoire alloué est le service (220) centralisateur.

12. Dispositif selon la revendication 11, dans lequel ledit au moins un espace mémoire est compris au sein d'une mémoire (200), ladite mémoire (200) étant comprise au sein du groupe comprenant :
- les mémoires de type « Random Access Memory » ;
- les mémoires de type « Ferroelectric Random Access Memory » ;
- les mémoires de type « Magnetoresistive Random Access Memory » ;
- les mémoires de type « Electronically Erasable Programmable Read-Only Memory ».

13. Dispositif selon l'une des revendications 11 et 12, dans lequel le dispositif électronique embarqué est une carte (2) SIM telle que définie dans la norme GSM.

14. Dispositif selon l'une des revendications 11 et 12, dans lequel le dispositif (2) électronique embarqué est une clef USB.

15. Système électronique comprenant :
- un dispositif (1) hôte, et
- un dispositif (2) électronique embarqué communiquant des données avec le dispositif (1) hôte, le dispositif (2) électronique embarqué étant le dispositif (2) électronique embarqué selon l'une des revendications 11 à 14.

16. Système selon la revendication 15, dans lequel le dispositif hôte est un téléphone (1) portable.

17. Système selon la revendication 15, dans lequel le dispositif (1) hôte est un ordinateur personnel.
